# EUROPEAN PATENT SPECIFICATION

(11) **EP 3 262 373 B1**
(45) Date of publication and mention of the grant of the patent: **26.12.2018**
(21) Application number: 16709304.6
(22) Date of filing: 24.02.2016
(51) Int. Cl.: G01B 1/00, G01B 7/00, G01B 7/012

(54) **SYSTEM FOR CHECKING DIMENSIONAL AND/OR GEOMETRIC FEATURES OF WORKPIECES, AND RELATIVE PROCEDURE FOR MANUFACTURING**
SYSTEM ZUR ÜBERPRÜFUNG VON DIMENSIONALEN UND/ODER GEOMETRISCHEN MERKMALEN VON WERKSTÜCKEN UND ZUGEHÖRIGES VERFAHREN ZUR HERSTELLUNG
SYSTÈME POUR VÉRIFIER DES CARACTÉRISTIQUES DIMENSIONNELLES ET/OU GÉOMÉTRIQUES DE PIÈCES À USINER, ET PROCÉDURE DE FABRICATION ASSOCIÉE

(30) Priority: 26.02.2015 IT BO20150100
(43) Date of publication of application: 03.01.2018
(73) Proprietor: Marposs Societa' Per Azioni, 40010 Bentivoglio (BO) (IT)
(72) Inventor: SANTINI, Alessandro, Rochester Hills, Michigan 48307 (US); GOVONI, Giacomo, 44028 Poggio Renatico (FE) (IT)
(86) International application number: PCT/EP2016/053880
(87) International publication number: WO 2016/135204

(56) References cited:
- EP-A1- 0 946 854
- US-A- 5 890 300
- US-A1- 2013 292 544
- US-A1- 2014 360 035

## Description

### Technical Field

The present invention relates to a system for checking dimensional and/or geometric features of a workpiece, comprising: a support and locating element, a feeler for touching the workpiece to be checked, a transmission assembly comprising an arm supporting the feeler and movable with respect to the support and locating element, and a transducer device designated to cooperate with the transmission assembly to detect the position of a checking surface of the arm with respect to the support and locating element and generate corresponding signals indicative of the dimensional and/or geometric features of the workpiece.

Described in the following is also a procedure for manufacturing a checking system with a support and locating element and an arm, movable with respect to the support and locating element, comprising the steps of arranging a sheet of material having density not higher than 1.6 g/cm³ and tensile strength not lower than 1.3 GPa, obtaining a plurality of flat elements from said sheet of material, and connecting said flat elements one to the other to obtain box-like structures with substantially rectangular hollow section that define at least one of the support and locating element and the arm (however, such a procedure is not claimed).

The present invention can be advantageously but not exclusively applied to the precision and high speed check of shape or profile of rotating workpieces mechanical manufactured with a tool, for example grinded with a grinder, that show small and frequent superficial undulations due to said mechanical manufacturing, which the following specification will explicitly refers to without loss of generality.

### Prior Art

Apparatuses for checking geometric features of workpieces, in particular for checking the surfaces shape of rotating pieces, are known and broadly widespread in the market.

Generally, the known apparatuses comprise a system for measuring or checking, with a support and locating element, a feeler apt to touch a rotating workpiece to be checked, a transmission assembly with a fulcrum that allows movements of the feeler with respect to the support and locating element, and a transducer device to detect the position of the feeler with respect to the support and locating element and provide a signal indicative of the dimensions of the workpiece. For example, in the European patent number EP0946854B1, owned by the applicant of the present application, a system for checking linear dimensions of workpieces is described, with an integral element that defines an arm to support a feeler, a reference portion and a fulcrum that allows rotations or flexures of the arm with respect to the reference portion, and a transducer device to provide signals indicative of the position of the feeler with respect to the reference portion. The integral element is made by means of a single U-bended strap of stainless steel sheet, later undergone to deep-drawing in one point wherein a very thin and soft fulcrum is obtained. As a consequence, a lightweight system featuring low measuring force results. In an operative phase, the arm, through the flexures in the fulcrum, maintains the feeler in contact with the rotating workpiece. Since the measuring force is low, the feeler follows the profile of the workpiece, the workpiece is not damaged, for example sagged and/or scratched, even when it is structurally weak and/or made of soft material, and the transducer detects the position of the feeler with respect to the reference portion and provides a signal indicative of said profile.

However, this system may show some problem in the precision and high speed check or measurement of dimensions and shape of pieces with common systemic shape errors that may arise, for example, during the grinding procedures. If the grinding wheel of the grinder, indeed, is not perfectly balanced, while rotating, it is consequently subject to regular vibrations that are known in literature with the name of chatter. Due to such vibrations, in a phase of manufacturing a workpiece, superficial undulations with amplitude up to 50 nm are created on the whole profile of the piece, that alter the shape of the latter. In a phase of checking the manufactured workpiece, when the feeler touches the rotating piece and runs across for example a rise front of a superficial undulation due to the chatter, the feeler is subjected to an impulsive force proportional to the rotational speed of the piece, which impulsive force moves the feeler away from the profile of the rotating piece. Despite its duration limited in time, this impulsive force is usually higher than the low measuring force of the described system, hence the feeler takes a certain time to reverse the moving away motion and touch back the rotating workpiece, probably bouncing on the latter at least once, during which the system detects an incorrect measurement of the profile features.

### Disclosure of the Invention

Object of the present invention is to provide an extremely accurate and reliable system for checking or measuring dimensional and/or geometric features of workpieces, for example for checking the shape of a rotating surface, which system has simple structure, can be easily and cheaply implemented, goes beyond the limits of the known checking system and can be used in precision apparatuses that work at high speed.

These and other objects are achieved by a checking system according to claim 1.

An important advantage obtained through a checking system according to the present invention and through an apparatus comprising one or more of said checking systems consists in the possibility of performing, with extremely reliable results, precision and high speed check or measurement of rotating workpieces that may show superficial undulations due to the mechanical manufacturing. An accurate and reliable checking system may be obtained through a simple, fast and economic procedure for manufacturing.

Further objects and advantages of the present invention will be clear from the detailed description that follows.

### Brief Description of the Drawings

The present invention is now described with reference to the attached sheets of drawings, given by way of nonlimiting examples, wherein:
- figure 1 is a schematic view of an apparatus with a system according to the present invention, very simplified and with parts removed for clarity, for checking dimensional and geometric feature of a workpiece;
- figure 2 is an enlargement of figure 1, that shows in a more detailed but however schematic way the checking system according to the present invention; and
- figure 3 is an enlarged section along line III-III of a detail of the checking system in figure 2.

### Best Mode for Carrying Out the Invention

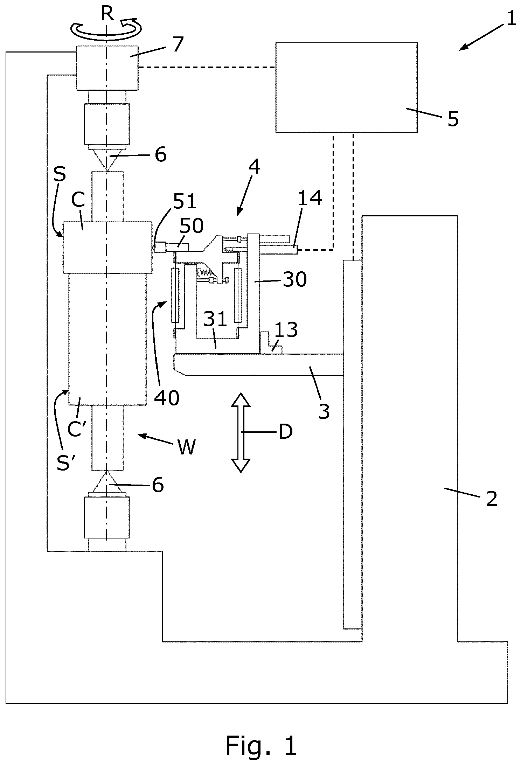

Figure 1 is a schematic view of an apparatus **1** for checking dimensional and/or geometric features of a workpiece **W,** in particular for checking the shape of a surface **S** of a component **C** of the workpiece **W.** The apparatus **1** comprises a frame **2,** support and rotation means **6** designed to refer with precision and rotate the workpiece **W,** consequently the component **C,** about a rotation axis **R,** a measurement slide **3** apt to carry out translation movements in both ways of a main direction **D** parallel to the rotation axis **R,** and a processing unit **5** apt to send control signals to the measurement slide **3** to control said translation movements. In addition, the apparatus **1** includes at least a checking system or measurement cell **4,** for checking and/or measuring dimensional and/or geometric features of the workpiece **W.** In the apparatus **1**, for instance, the measurement cell **4** is designed to be coupled to the measurement slide **3** in order to be moved along the main direction **D.** In more detail, the measurement cell **4** comprises a support and locating element **30** with a base **31** rigidly connected and conveniently referred to the measurement slide **3** by means of known elements schematically represented with an abutment **13.**

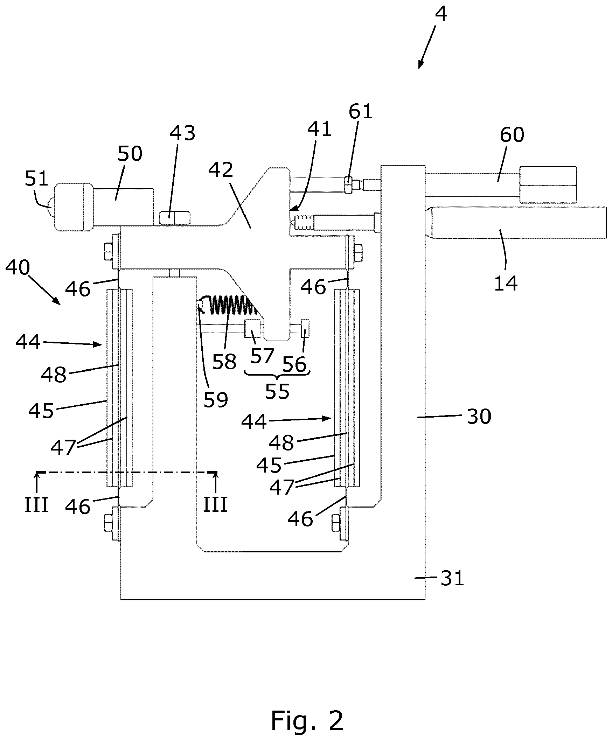

The measurement cell **4** according to the present invention also comprises a feeler **50** with a contacting element, a contacting sphere **51** in figure **1**, for touching the workpiece **W** to be checked, in particular the surface **S** of the component **C,** and a transmission assembly **40.** The measurement cell **4** also comprises an arm **42** supporting the feeler **50** and movable with respect to the support and locating element **30,** allowing movements of the feeler **50** along a measurement direction due to the variation of the radial dimensions of the component **C** which the contacting sphere **51** abuts against. With reference to figure **2**, the feeler **50** is rigidly connected to the arm **42,** in such a way that the position of the arm **42,** more specifically of a checking surface **41** of the latter, with respect to the support and locating element **30** is linearly dependent on the position of said feeler **50.**

A transducer device **14** of the measurement cell **4,** for example a "pencil"-like head with axial movement, that is shown connected to the support and locating element **30** in figure, is able to detect the position of the feeler **50** with respect to the support and locating element **30** and generate corresponding signals indicative of the dimensional and/or geometric features of the component **C** of the workpiece **W.** In particular, the transducer device **14** is designed to cooperate with the transmission assembly **40,** for example it has a movable part in contact with the checking surface **41** of the arm **42,** to detect the position of the latter, and consequently of the feeler **50,** with respect to the support and locating element **30,** and send the corresponding signals to the processing unit **5.**

The transducer device **14** is also connected to the processing unit **5** that receives and processes the signals generated by the measurement cell **4** in order to check or measure said features. The processing unit is also connected to a unit known per se and schematically represented with the reference **7,** that sends signals indicative of the angular position of the workpiece **W** and then of the component **C** during the respective rotation.

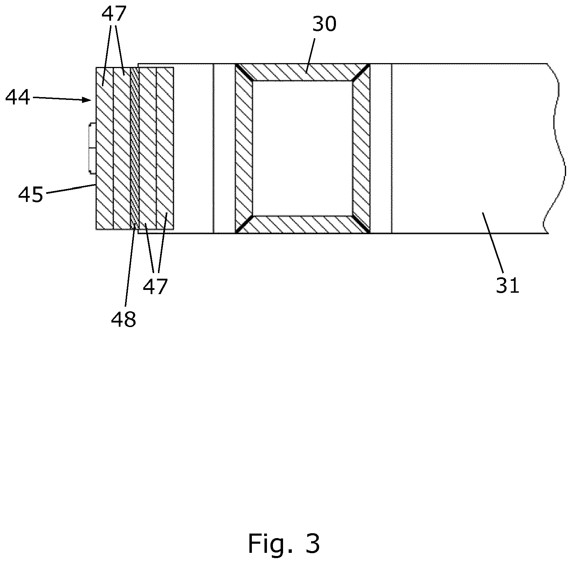

At least one of the support and locating element **30** and the arm **42,** preferably both of them, is box-like, that is it has a structure with substantially rectangular hollow section, as shown in figure 3. In particular, such structure is defined by means of a plurality of flat elements connected one to the other, preferably glued at connection edges. The flat elements are made of a material having density not higher than 1.6 g/cm³ (therefore more lightweight than steel, which has density equal to about 7.7 g/cm³), and high tensile strength, for example not lower than 1.3 GPa, such as for instance a carbon fibre composite material. Said flat elements can be advantageously obtained from one sheet of material, for example cut by means of water jet technology, with production costs and times notably inferior to those of a printed element. As a consequence, the support and locating element **30** and/or the arm **42** result to be robust and lightweight at the same time.

The transmission assembly **40** comprises also two connection struts **44** between the arm **42** and the support and locating element **30,** in particular the base **31.** Each of the two connection struts **44** includes a flat and stiff portion **45** and two elastic portions that define a fulcrum **46,** for example, at each of two opposed connection ends to the base **31** and to the arm **42.** The connection struts **44** are suitably arranged parallel one to the other. As a consequence, the base **31** of the support and locating element **30** and the arm **42,** that also result aligned on directions parallel one to the other, together with the two connection struts **44** form a flexible parallelogram structure provided with fulcra **46,** apt to allow movements of the arm **42,** hence of the feeler **50,** with respect to the support and locating element **30,** along the measurement direction.

Each of the two connection struts **44** preferably comprises a lamina **48** made of a material with density not higher than 4.4 g/cm³ (therefore more lightweight than steel, that has density equal to about 7.7 g/cm³, as already said), tensile strength not lower than 1000 MPa, and modulus of elasticity not higher than 110 GPa (that is less stiff than steel, whose modulus of elasticity is about 210 GPa), for example a titanium alloy. In this case, the flat and stiff portion **45** is obtained by coupling, preferably gluing, backing elements **47,** for example carbon fibres composite material plates, to the lamina **48,** in a central zone not comprising the two elastic portions that define the fulcra **46** at the connection ends. Also the backing elements **47** can be advantageously obtained, for example cut by means of water jet technology, from said one sheet of material which the flat elements are obtained from, with the already mentioned advantages. Thanks also to the characteristics of the material of the laminae **48,** the flexible parallelogram structure is characterized by a high capability of warping, in particular bending, when it undergoes a force, and rapidly going back to the previous position when the force that caused its deformation ceases.

Basically, the position of the checking surface **41** of the arm **42** depends in a nonlinear way also on the movements of the arm **42** along directions different from the measurement one, as a function of the flexures of the parallelogram, more exactly the flexures of the elastic portions of the connection struts **44** that define the fulcra **46.** With respect to the support and locating element **30,** indeed, the arm **42** carries out movements along a trajectory that can be ideally assimilated to a circular arc. The corresponding signal that the head **14** in contact with the checking surface **41** sends to the processing unit **5,** comprises therefore a linear component, dependent on the position of the feeler **50** along the measurement direction, and a nonlinear, undesired component. In order to get correct information about dimensions and shape of said component **C,** when the contacting sphere **51** touches the surface **S** of the component **C,** it is advantageous that the processing unit **5** executes an appropriate compensation algorithm to remove the nonlinear component from the signals received from the head **14.**

The transmission assembly **40** includes a limitation mechanism **55,** connected to the support and locating element **30,** which comprises a first abutment element **56** and a second abutment element **57** apt to cooperate with the arm **42** in order to limit its movements, and consequently limit the flexure of the parallelogram, thus preventing the damage of the fulcra **46.** In more detail, the first abutment element **56** limits the over-stroke of the arm **42,** whereas the second abutment element **57** limits the pre-stroke of the latter.

A tension spring **58** refers to the arm **42** on the one part and to a connection element **59** connected to the support and locating element **30** on the other, to urge the feeler **50,** in particular the contacting sphere **51,** towards the component **C** of the workpiece **W.** This tension spring **58** is preferably adjustable, to set the pressure that the contacting sphere **51** applies on the surface **S** of the component **C** to be checked.

A locking element or pin **43** is apt to cooperate with the transmission assembly **40** in order to block it in a static configuration, wherein for example the laminae **48** are not bent, in particular during transport operations or maintenance works. For instance, the locking pin **43** may be inserted in an opening of the arm **42** for fastening the latter to the support and locating element **30,** in order to prevent whichever flexure of the parallelogram structure. In the static configuration, the transmission assembly **40** is safeguarded from possible collisions or inaccurate handling that could damage or break some components or the whole transmission assembly **40.**

The measurement cell **4** also comprises a retraction device **60,** for example a pneumatic cylinder, connected to the support and locating element **30.** The pneumatic cylinder **4** is apt to receive control signals from the processing unit **5** in order to cooperate with the transmission assembly **40,** for example pull the arm **42** up to the contact with the first abutment element **56** by overcoming the force of the tension spring **58,** and bring the measurement cell **4** in a retraction state, wherein the parallelogram structure is bent and, if the workpiece **W** is arranged in the support and rotation means **6,** the contacting sphere **51** is at a certain distance from the surface of the component **C.** The pneumatic cylinder **60** is advantageously equipped with an adjusting element or nut **61** apt to cooperate with the support and locating element **30** to adjust the stroke of the pneumatic cylinder **60** with respect to the transmission assembly **40.**

The operation of the apparatus **1** is described in the following, for example for checking the shape and/or the profile of a surface **S** of a component **C** of a workpiece **W,** where the surface **S** features small and frequent undulations due to the mechanical manufacturing.

In case of inactivity, the locking pin **43** is inserted in the opening of the arm **42,** in order to fasten the latter to the support and locating element **30.** Consequently, the transmission assembly **40** is blocked in the static configuration wherein whichever flexure of the parallelogram structure is prevented. In order to perform checking operations with the apparatus **1**, the locking pin **43** must be removed from the opening of the arm **42** so that the parallelogram structure is free to bend.

Conveniently, a calibration procedure may be initially executed by checking a master, that is a sample piece that comprises a surface having a reference profile that corresponds to the nominal profile of the surface **S** of the component **C** to be checked. The master is arranged in and referred to the support and rotation means **6** of the apparatus **1** and rotated about the rotation axis **R,** so that the surface with the reference profile is located, while rotating, at a height that is known a priori.

In an initial phase, the pneumatic cylinder **60** receives the control signal from the processing unit **5,** to pull the arm **42** up to the contact with the first abutment element **56** by overcoming the force of the tension spring **58,** so that the measurement cell **4** is brought in the previously described retraction state. As the base **31** is referred and rigidly connected to the measurement slide **3,** the latter, conveniently controlled by the processing unit **5,** moves the measurement cell **4,** that is retracted, along the main direction **D,** until the contacting sphere **51** is brought at the known height of the reference surface of the master.

In a detection phase, the pneumatic cylinder **60,** controlled by the processing unit **5,** releases the arm **42,** and the contacting sphere **51** of the feeler **50,** under the action of the tension spring **58,** is urged against the reference surface. At this point, the tension spring **58** is conveniently adjusted to set the pressure that the contacting sphere **51** exercises on the master so that the feeler follows the profile of the latter, and then of the component **C,** without damaging them. The head **14,** as it is in contact with the checking surface **41** of the arm **42,** generates signals indicative of the position of the feeler **50** along the measurement direction. The processing unit **5** detects such signals for at least one rotation of the master and processes them in a known way with information concerning the rotation, in particular the angular position of the master, to obtain and store, in a way known per se, the reference profile which the following measurements are compared with.

The procedure for checking the shape, and possibly the dimensions, of the surface **S** of the component **C** occurs at the end of the calibration.

In particular, in a new initial phase, the measurement cell **4** is brought in the retraction state by the pneumatic cylinder **60**, as previously described, wherein the contacting sphere **51** does not touch the reference surface, so that the master can be removed from the apparatus **1**. The workpiece **W** is arranged in and referred to the support and rotation means **6** of the apparatus **1** and rotated about the rotation axis **R**, so that the surface **S** of the component **C** to be checked is located, while rotating, at the above-mentioned height that is known a priori.

In a subsequent detection phase, the pneumatic cylinder **60,** controlled by the processing unit **5**, releases the arm **42**, and the contacting sphere **51** of the feeler **50,** under the action of the tension spring **58,** is consequently urged against the surface **S.** The head **14,** as it is in contact with the checking surface **41** of the arm **42,** generates signals indicative of the position of the feeler **50** along the measurement direction. The processing unit **5** detects such signals for at least one rotation of the workpiece **W,** processes them in a known way with information concerning the rotation, in particular the angular position, of the workpiece **W,** and compares the result of the processing relative to the profile of the surface **S** of the component **C** and the reference profile stored during the calibration procedure, in order to verify whether the real profile matches or not with the reference profile for less than predetermined tolerances and/or to detect shape errors of the checked surface **S,** for example the frequency and the entity of the superficial undulations previously cited.

When the contacting sphere **51,** during the scan of the surface **S** over the rotation of the component **C,** runs across a rise front of one of the superficial undulations, it is subjected to an impulsive force proportional to the rotational speed of said component **C,** that moves the contacting sphere **51** away from the surface **S** being checked. By advantageously combining the lightness and robustness characteristics of the arm **42** or of the support and locating element **30,** preferably of both, to the lightness, tensile strength and modulus of elasticity characteristics of the two connection struts **44** that define the fulcra **46,** the measurement cell **4** is able to counteract such impulsive force with an opposite force sufficient for the contacting sphere **51** to take a reduced time, with respect to the known systems, to reverse the moving away motion and touch back the rotating surface **S,** thus reducing or zeroing the number of bounces and minimizing the time during which the processing unit **5** detects signals that are not indicative of the profile, or of the radial dimensions of the component **C.**

When the detection phase ends, the measurement cell **4** is brought again by the pneumatic cylinder **60** in the retraction state, as previously described.

Now, the measurement slide **3,** appropriately controlled by the processing unit **5,** can move the measurement cell **4,** which is in the retraction state, along the main direction **D,** until the contacting sphere **51** is brought at a further known height of a second surface **S'** of a further component **C'** of the same workpiece **W.** If the second surface **S'** has a profile substantially identical to that of the surface **S,** a new checking procedure occurs; otherwise, a new calibration procedure may occur with a second master, comprising a reference surface with a reference profile that corresponds to the nominal profile of the second surface **S'** to be checked, appropriately located, while rotating, at the further known height.

In addition to what described hitherto, the apparatus 1 may be also applied for measuring linear dimensions, for example diameters. A possible alternative application includes dimensional and/or shape checking of many pieces of the same type, namely pieces that have similar morphology but different nominal dimensions, such as for example journal bearing of various crankshaft or camshaft.

The apparatus **1** for checking dimensional and/or geometric features described hitherto may be modified without departing from the scope of the present invention.

Components having shape and/or dimensions different from those illustrated, for example, may be used. In particular, the support and locating element **30** and the arm **42** may be molded in a way different from that shown in figure 2 and the superficial elements may include convenient openings, to further reduce the weight of the measurement cell **4** without modifying its tensile strength.

Possibly, at least one of the support and locating element **30** and the arm **42** may be filled with a material that could absorb collisions and vibrations, for example a thermoplastic polymer such as acrylonitrile butadiene styrene (ABS).

The limitation mechanism **55** and the connection element **59** may be directly connected to the support and locating element **30,** or by means of a supporting element integral with said support and locating element **30.** Analogously, the locking pin **43** may fasten the arm **42** directly to the support and locating element **30,** or fasten the arm **42** to the above-mentioned supporting element or a further supporting element integral with the support and locating element **30.**

The pneumatic cylinder **60** may possibly be equipped with a locking ring nut apt to block it in a position wherein the air connection of the pneumatic cylinder **60** can be easier entered.

As an alternative, a different retraction device **60** may be used, for example an asynchronous motor, also controlled by the processing unit **5,** that has the advantage of being faster and more accurate with respect to a pneumatic cylinder.

As an alternative, the pencil-head **14** may be substituted by a different transducer device, for example an optical linear scale, preferably laser, the reader thereof is possibly coupled to the checking surface **41** of the arm **42.**

An apparatus **1** comprising one or more measurement cells **4** according to the invention may assume many possible configurations, all known per se, different from the configuration of figure 1. It may comprise for example more measurement cells **4** fixed to a frame alike the frame **2** and suitably oriented for simultaneously checking the dimensional and/or geometric features of various components **C** of the same workpiece **W**, since the number of the measurement cells **4** matches for example the number of the components **C** to be checked.

## Claims

1. Checking system (4), for checking dimensional and/or geometric features of a workpiece (W), comprising:
- a support and locating element (30);
- a feeler (50) for touching the workpiece (W) to be checked;
- a transmission assembly (40), comprising an arm (42), supporting the feeler (50) and movable with respect to the support and locating element (30); and
- a transducer device (14) designed to cooperate with the transmission assembly (40) to detect the position of a checking surface (41) of the arm (42) with respect to the support and locating element (30) and generate corresponding signals indicative of the dimensional and/or geometric features of the workpiece (W);
**characterized in that** at least one of the support and locating element (30) and the arm (42) is made of a material having a density not higher than 1.6 g/cm³ and a tensile strength not lower than 1.3 GPa.

2. Checking system (4) according to claim 1, wherein said at least one of the support and locating element (30) and the arm (42) is made of a carbon fibre composite material.

3. Checking system (4) according to claim 1 or claim 2, wherein said at least one of the support and locating element (30) and the arm (42) is defined by means of a plurality of flat elements connected one to the other.

4. Checking system (4) according to claim 3, wherein said flat elements include openings.

5. Checking system (4) according to claim 3 or 4, wherein said flat elements are obtained from a sheet of material.

6. Checking system (4) according to one of the claims from 3 to 5, wherein said flat elements are obtained by means of water jet technology.

7. Checking system (4) according to one of the previous claims, wherein the support and locating element (30) and the arm (42) are both made of said material having density not higher than 1.6 g/cm³ and tensile strength not lower than 1.3 GPa.

8. Checking system (4) according to one of the previous claims, wherein at least one of the support and locating element (30) and the arm (42) is filled with a material able to absorb collisions and vibrations.

9. Checking system (4) according to one of the previous claims, wherein the transmission assembly (40) comprises also two connection struts (44) between the arm (42) and a base (31) of the support and locating element (30), each with two elastic portions that define a fulcrum (46) at each of two opposed connection ends, the base (31), the arm (42) and the two connection struts (44) forming a parallelogram structure.

10. Checking system (4) according to claim 9, wherein each of the two connection struts (44) comprises a lamina (48) made of a material with density not higher than 4.4 g/cm³, tensile strength not lower than 1000 MPa, and modulus of elasticity not higher than 110 GPa.

11. Checking system (4) according to claim 10, wherein said lamina(48) is a titanium alloy lamina.

12. Checking system (4) according to claim 10 or claim 11, wherein each of said two connection struts (44) includes a flat and stiff portion (45) obtained by coupling backing elements (47) to said lamina (48) in a central zone.

13. Checking system (4) according to claim 12, wherein said backing elements (47) are carbon fibres plates glued to said lamina (48).

14. Equipment (1) for checking dimensional and/or geometric features of a workpiece (W), comprising:
- support and rotation means (6) designed to refer and rotate the workpiece (W) about a rotation axis (R);
- at least one checking system (4) according to any one of the previous claims; and
- a processing unit (5) apt to detect and process the signals generated by the checking system (4) in order to check the dimensional and/or geometric features of the workpiece (W).

15. Equipment (1) according to claim 14, further comprising a measurement slide (3) apt to carry out translation movements in both ways of a main direction (D) parallel to the rotation axis (R) of the workpiece (W), the processing unit (5) being further apt to send control signals to the measurement slide (3) to control said translation movements, and said at least one checking system (4) being designed to be coupled to the measurement slide (3) in order to be moved along the main direction (D).

## Patentansprüche

1. Prüfsystem (4) zur Überprüfung von dimensionalen und/oder geometrischen Merkmalen eines Werkstücks (W), aufweisend:
- ein Halte- und Fixierelement (30);
- einen Taster (50) zum Berühren des zu überprüfenden Werkstücks (W);
- eine Übersetzungsanordnung (40), die einen Arm (42) aufweist, der den Taster (50) hält und in Bezug auf das Halte- und Fixierelement (30) beweglich ist; und
- eine Signalgebervorrichtung (14), die dazu ausgebildet ist, mit der Übersetzungsanordnung (40) zusammenzuwirken, um die Position einer Prüffläche (41) des Arms (42) in Bezug auf das Halte- und Fixierelement (30) zu erfassen und entsprechende Signale zu erzeugen, die die dimensionalen und/oder geometrischen Merkmale des Werkstücks (W) anzeigen;
**dadurch gekennzeichnet, dass** mindestens eines von dem Halte- und Fixierelement (30) und dem Arm (42) aus einem Material mit einer Dichte, die nicht höher als 1,6 g/cm³ ist, und einer Zugfestigkeit, die nicht niedriger als 1,3 GPa ist, hergestellt ist.

2. Prüfsystem (4) nach Anspruch 1, wobei das mindestens eine von dem Halte- und Fixierelement (30) und dem Arm (42) aus einem Kohlefaserverbundwerkstoff hergestellt ist.

3. Prüfsystem (4) nach Anspruch 1 oder Anspruch 2, wobei das mindestens eine von dem Halte- und Fixierelement (30) und dem Arm (42) durch mehrere flache Elemente, die miteinander verbunden sind, definiert ist.

4. Prüfsystem (4) nach Anspruch 3, wobei die flachen Elemente Öffnungen aufweisen.

5. Prüfsystem (4) nach Anspruch 3 oder 4, wobei die flachen Elemente aus einer Materialbahn erhalten werden.

6. Prüfsystem (4) nach einem der Ansprüche 3 bis 5, wobei die flachen Elemente mittels Wasserstrahltechnik erhalten werden.

7. Prüfsystem (4) nach einem der vorhergehenden Ansprüche, wobei das Halte- und Fixierelement (30) und der Arm (42) beide aus dem Material mit einer Dichte, die nicht höher als 1,6 g/cm³ ist, und einer Zugfestigkeit, die nicht niedriger als 1,3 GPa ist, hergestellt sind.

8. Prüfsystem (4) nach einem der vorhergehenden Ansprüche, wobei mindestens eines von dem Halte- und Fixierelement (30) und dem Arm (42) mit einem Material ausgefüllt ist, das in der Lage ist, Stöße und Schwingungen zu absorbieren.

9. Prüfsystem (4) nach einem der vorhergehenden Ansprüche, wobei die Übersetzungsanordnung (40) zudem zwei Verbindungsstreben (44) zwischen dem Arm (42) und einer Basis (31) des Halte- und Fixierelements (30) aufweist, die jeweils zwei elastische Abschnitte aufweisen, die an jedem von zwei entgegengesetzten Enden einen Drehpunkt (46) definieren, wobei die Basis (31), der Arm (42) und die zwei Verbindungsstreben (44) eine Parallelogrammstruktur bilden.

10. Prüfsystem (4) nach Anspruch 9, wobei jede der zwei Verbindungsstreben (44) ein Plättchen (48) aufweist, das aus einem Material mit einer Dichte, die nicht höher als 4,4 g/cm³ ist, einer Zugfestigkeit, die nicht niedriger als 1000 MPa ist, und einem Elastizitätsmodul, der nicht höher als 110 GPa ist, hergestellt ist.

11. Prüfsystem (4) nach Anspruch 10, wobei das Plättchen (48) ein Titanlegierungsplättchen ist.

12. Prüfsystem (4) nach Anspruch 10 oder Anspruch 11, wobei jede der zwei Verbindungsstreben (44) einen flachen und steifen Abschnitt (45) aufweist, der durch ein Verbinden von Stützelementen (47) mit dem Plättchen (48) in einem zentralen Bereich erhalten wird.

13. Prüfsystem (4) nach Anspruch 12, wobei die Stützelemente (47) Kohlefaserplatten sind, die an das Plättchen (48) geklebt sind.

14. Gerät (1) zur Überprüfung von dimensionalen und/oder geometrischen Merkmalen eines Werkstücks (W), aufweisend:
- Halte- und Rotationsmittel (6), die dazu ausgebildet sind, das Werkstück (W) zu halten und es um eine Drehachse (R) zu drehen;
- mindestens ein Prüfsystem (4) nach einem der vorhergehenden Ansprüche; und
- eine Verarbeitungseinheit (5), die in der Lage ist, die durch das Prüfsystem (4) erzeugten Signale zu erfassen und zu verarbeiten, um die dimensionalen und/oder geometrischen Merkmale des Werkstücks (W) zu überprüfen.

15. Gerät (1) nach Anspruch 14, ferner aufweisend einen Messschlitten (3), der in der Lage ist, Verschiebungsbewegungen in beide Richtungen einer Hauptrichtung (D) parallel zu der Drehachse (R) des Werkstücks (W) durchzuführen, wobei die Verarbeitungseinheit (5) ferner in der Lage ist, Steuersignale an den Messschlitten (3) zu senden, um die Verschiebungsbewegungen zu steuern, und wobei das mindestens eine Prüfsystem (4) dazu ausgebildet ist, mit dem Messschlitten (3) verbunden zu werden, um entlang der Hauptrichtung (D) bewegt zu werden.

## Revendications

1. Système de vérification (4) pour vérifier des caractéristiques dimensionnelles et/ou géométriques d'une pièce à travailler (W), comprenant :
- un élément de support et de positionnement (30) ;
- un palpeur (50) pour palper la pièce à travailler (W) qui doit être vérifiée ;
- un ensemble de transmission (40), comprenant un bras (42), supportant le palpeur (50) et mobile par rapport à l'élément de support et de positionnement (30) ; et
- un dispositif transducteur (14) conçu pour coopérer avec l'ensemble de transmission (40) pour détecter la position d'une surface de contrôle (41) du bras (42) par rapport à l'élément de support et de positionnement (30) et pour générer des signaux correspondants indiquant les caractéristiques dimensionnelles et/ou géométriques de la pièce à travailler (W) ;
**caractérisé en ce que** au moins un de l'élément de support et de positionnement (30) et/ou du bras (42) est composé d'un matériau présentant une densité inférieure ou égale à 1,6 g/cm³ et une résistance à la traction supérieure ou égale à 1, 3 GPa.

2. Système de vérification (4) selon la revendication 1, dans lequel ledit au moins un de élément de support et de positionnement (30) et/ou du bras (42) est composé d'un matériau composite en fibre de carbone.

3. Système de vérification (4) selon la revendication 1 ou la revendication 2, dans lequel ledit au moins un de l'élément de support et de positionnement (30) et/ou du bras (42) est défini au moyen d'une pluralité d'éléments plats reliés les uns aux autres.

4. Système de vérification (4) selon la revendication 3, dans lequel lesdits éléments plats comportent des ouvertures.

5. Système de vérification (4) selon la revendication 3 ou 4, dans lequel lesdits éléments plats sont obtenus à partir d'une feuille de matériau.

6. Système de vérification (4) selon l'une des revendications 3 à 5, dans lequel lesdits éléments plats sont obtenus au moyen d'une technologie par jet d'eau.

7. Système de vérification (4) selon l'une des revendications précédentes, dans lequel l'élément de support et de positionnement (30) et le bras (42) sont l'un et l'autre composés dudit matériau présentant une densité inférieure ou égale à 1,6 g/cm³ et une résistance à la traction supérieure ou égale à 1,3 GPa.

8. Système de vérification (4) selon l'une des revendications précédentes, dans lequel au moins un de l'élément de support et de positionnement (30) et/ou du bras (42) est rempli d'un matériau qui peut absorber des collisions et des vibrations.

9. Système de vérification (4) selon l'une des revendications précédentes, dans lequel l'ensemble de transmission (40) comprend également deux entretoises de liaison (44) entre le bras (42) et une base (31) de l'élément de support et de positionnement (30), chacune ayant au moins deux parties élastiques qui définissent un point d'appui (46) au niveau de chacune de deux extrémités de liaison opposées, la base (31), le bras (42) et les deux entretoises de liaison (44) formant une structure en forme de parallélogramme.

10. Système de vérification (4) selon la revendication 9, dans lequel chacune des deux entretoises de liaison (44) comprend une lamelle (48) composée d'un matériau présentant une densité inférieure ou égale à 4,4 g/cm³, une résistance à la traction supérieure ou égale à 1 000 MPa et un module d'élasticité inférieur ou égal à 110 GPa.

11. Système de vérification (4) selon la revendication 10, dans lequel ladite lamelle (48) est une lamelle en alliage de titane.

12. Système de vérification (4) selon la revendication 10 ou la revendication 11, dans lequel chacune desdites deux entretoises de liaison (44) comprend une partie plate et rigide (45) obtenue en couplant des éléments de renfort (47) à ladite lamelle (48) dans une zone centrale.

13. Système de vérification (4) selon la revendication 12, dans lequel lesdits éléments de renfort (47) sont des plaques en fibre de carbone collées à ladite lamelle (48).

14. Équipement (1) pour vérifier des caractéristiques dimensionnelles et/ou géométriques d'une pièce à travailler (W), comprenant :
- un moyen de support et de rotation (6) conçu pour positionner et faire tourner la pièce à travailler (W) autour d'un axe de rotation (R) ;
- au moins un système de vérification (4) selon l'une quelconque des revendications précédentes ; et
- une unité de traitement (5) qui convient pour détecter et traiter les signaux générés par le système de vérification (4) afin de vérifier les caractéristiques dimensionnelles et/ou géométriques de la pièce à travailler (W) .

15. Équipement (1) selon la revendication 14, comprenant en outre un coulisseau de mesure (3) qui convient pour réaliser des mouvements de translation dans les deux sens d'une direction principale (D) parallèle à l'axe de rotation (R) de la pièce à travailler (W), l'unité de traitement (5) étant en outre susceptible d'envoyer des signaux de commande au coulisseau de mesure (3) pour commander lesdits mouvements de translation et ledit ou lesdits systèmes de vérification (4) étant conçus pour être couplés au coulisseau de mesure (3) afin d'être déplacés dans la direction principale (D).
